# FASCICULE DE BREVET EUROPEEN

(11) **EP 2 176 581 B1**
(45) Date de publication et mention de la délivrance du brevet: **12.01.2011**
(21) Numéro de dépôt: 08827160.6
(22) Date de dépôt: 11.07.2008
(51) Int. Cl.: F17C 3/08, B60K 15/03

(54) **RÉSERVOIR DE FLUIDE CRYOGÉNIQUE ET VÉHICULE COMPRENANT UN TEL RÉSERVOIR**
KRYOGENER FLÜSSIGKEITSTANK UND FAHRZEUG MIT EINEM SOLCHEN TANK
CRYOGENIC FLUID TANK AND VEHICLE COMPRISING SUCH A TANK

(30) Priorité: 06.08.2007 FR 0756954
(43) Date de publication de la demande: 21.04.2010
(73) Titulaire: L'Air Liquide Société Anonyme pour l'Etude et l'Exploitation des Procédés Georges Claude, 75007 Paris (FR)
(72) Inventeur: DURAND, Fabien, F-38340 Voreppe (FR)
(74) Mandataire: De Cuenca, Emmanuel Jaime
(86) Numéro de dépôt international: PCT/FR2008/051307
(87) Numéro de publication internationale: WO 2009/019375

(56) Documents cités:
- EP-A- 0 677 694
- EP-A- 1 584 859
- WO-A-2005/100210
- DE-A1- 1 940 339
- DE-A1- 3 206 430
- DE-A1-102006 045 119
- US-A1- 2003 183 638
- US-B1- 6 453 680

## Description

La présente invention concerne un réservoir de fluide cryogénique et un véhicule comprenant un tel réservoir.

L'invention concerne plus particulièrement un réservoir de fluide cryogénique, comprenant une enveloppe interne disposée dans une enveloppe externe avec interposition d'un espace d'isolation sous vide, le réservoir et en particulier les deux enveloppes interne et externe ayant une forme générale oblongue dont la section selon un plan perpendiculaire à l'axe longitudinal est non circulaire, ledit réservoir comprenant au moins un élément de renforcement de l'enveloppe externe pour éviter le flambage de cette dernière.

Pour des questions d'optimisation de l'espace disponible, notamment dans des véhicules automobiles, les réservoirs doivent présenter des formes complexes qui ne présentent pas les mêmes caractéristiques de tenue mécanique avantageuse que les formes simples sphériques ou cylindriques habituelles pour le stockage de fluides sous pression.

De plus, de tels réservoirs embarqués doivent être capables de résister à des accélérations transversales importantes, ce qui pose des problèmes au niveau de la tenue mécanique des enveloppes, mais aussi de leur assemblage mutuel, ce dernier problème étant encore compliqué par les questions d'échange thermique entre les deux enveloppes.

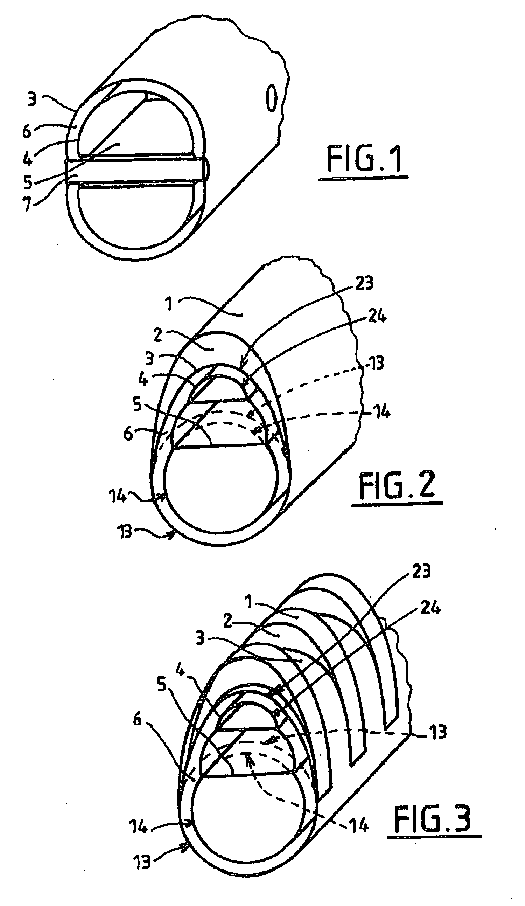

Ainsi, lorsque le volume et la géométrie d'un réservoir isolé sous vide est imposé, il n'est plus possible d'utiliser une forme cylindrique. Dans ce cas (volume non cylindrique), l'enveloppe externe non cylindrique doit être renforcée contre le flambage. Une solution connue est décrite en référence à la figure 1. Dans cet exemple de réalisation l'enveloppe externe 3 est renforcée par une barre 7 anti-flambage interne reliant deux extrémités ou parois de l'enveloppe externe 3. L'enveloppe interne 4 est renforcée quant à elle par une membrane interne. Pour maintenir le vide 6 inter-parois et assurer l'étanchéité de l'enveloppe interne, des aménagements particuliers doivent être prévus. De plus, cette solution entraîne une augmentation du transfert thermique entre l'extérieur et l'enveloppe interne 4. Cette augmentation du transfert thermique se concentre autour de ces barres 7 anti-flambage.

Un autre inconvénient provient du fait que la mise en place du réservoir interne dans le réservoir externe est rendu difficile par la présence des barres 7 anti-flambage. Un autre exemple est décrit dans le document EP 1 584 859.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que le ou les éléments de renforcement de l'enveloppe externe sont disposés uniquement sur la surface extérieure de l'enveloppe externe.

Par ailleurs, des modes de réalisation de l'invention peuvent comporter l'une ou plusieurs des caractéristiques suivantes :
- le ou les éléments de renforcement comprennent une structure disposée de façon continue ou de façon discrète sur la portion de surface extérieure de l'enveloppe externe ayant un volume non cylindrique,
- le ou les éléments de renforcement comprennent l'un au moins des constituants suivants : du bois, de la mousse plastique, une structure à nid d'abeille, des raidisseurs métalliques,
- le ou les éléments de renforcement sont interposés entre la surface extérieure de l'enveloppe externe et une paroi extérieure rapportée autour d'au moins une partie du réservoir,
- en section selon un plan perpendiculaire à l'axe longitudinal du réservoir, le réservoir et en particulier les deux enveloppes interne et externe ont chacune une forme comprenant une portion circulaire augmentée d'une excroissance faisant saille par rapport au cercle fictif complet définit par la portion circulaire et en ce que le ou les élément de renforcement sont disposés uniquement sur la portion de surface extérieure de l'enveloppe externe correspondant à l'excroissance,
- les excroissances définies par les enveloppes externes et internes forment chacune un volume distinct d'une portion de cylindre, c'est-à-dire que la surface extérieure totale de chaque excroissance ne correspond pas à une portion de cylindre,
- l'enveloppe interne comprend au moins un élément de renfort interne tel qu'une paroi ou membrane reliant transversalement deux portions de l'enveloppe,
- le ou les éléments de renforcement de l'enveloppe externe ont une épaisseur variable selon la circonférence de la surface extérieure de l'enveloppe externe dans un plan perpendiculaire à l'axe longitudinal est non circulaire.

L'invention concerne également l'utilisation d'un tel réservoir dans un véhicule ainsi qu'un véhicule correspondant.

D'autres particularités et avantages apparaîtront à la lecture de la description ci-après, faite en référence aux figures dans lesquelles :
- la figure 1 représente une vue en perspective, schématique et en coupe d'un exemple de réservoir cryogénique à section non circulaire selon l'art antérieur,
- la figure 2 représente une vue en perspective, schématique et en coupe, d'un premier exemple de réservoir cryogénique à section non circulaire selon l'invention,
- la figure 3 représente une vue en perspective, schématique et en coupe, d'un second exemple de réservoir cryogénique à section non circulaire selon l'invention.

Sur la figure 2 on a représenté schématiquement (les épaisseurs des parois ne sont pas toutes à l'échelle) un réservoir comprenant une enveloppe 4 de stockage interne disposée dans une enveloppe 3 externe et un espace d'isolation sous vide 6 ménagé entre les deux enveloppes 3 et 4.

Dans le mode de réalisation représenté, les enveloppes 3 et 4 présentent une configuration générale tubulaire oblongue.

La section de chaque enveloppe 3, 4 selon un plan perpendiculaire à l'axe longitudinal est non circulaire. C'est-à-dire que chaque enveloppe 3, 4 décrit, en section transversale selon un plan perpendiculaire à l'axe longitudinal du réservoir, une forme comprenant une portion circulaire 13, 14 principale augmentée d'une « excroissance » 23, 24 faisant « saille » par rapport au cercle fictif 13, 14 complet définit par la portion circulaire 13, 14 principale.

Dans l'exemple non limitatif représenté l'enveloppe extérieure 3 a, en section transversale, la forme générale d'un oeuf composé d'une portion cylindrique basse 13 (cylindre tronqué) et de l'excroissance allongée 23 à laquelle elle se raccorde de façon monobloc de préférence.

L'enveloppe 4 interne comprend une portion cylindrique 13 inférieure principale (cylindre tronqué) à laquelle se raccorde une excroissance comprenant (de bas en haut), une première et une seconde portion cylindrique supplémentaires de diamètres successifs décroissants. L'excroissance forme ainsi un dôme comprenant sur son sommet une protubérance.

Comme représenté, l'enveloppe interne 4 peut comprendre au moins un élément de renfort 5 interne tel qu'une paroi ou membrane reliant transversalement deux portions de l'enveloppe 4.

Selon l'invention, le réservoir comprend au moins un élément 2 de renforcement de l'enveloppe externe pour éviter le flambage de cette dernière, le ou les éléments 2 de renforcement de l'enveloppe externe étant disposés sur la surface extérieure de l'enveloppe externe 3 et non pas à l'intérieur du réservoir comme proposé selon l'art antérieur.

De préférence, le ou les éléments 2 de renforcement sont disposés uniquement sur la portion de surface extérieure de l'enveloppe externe 3 correspondant à l'excroissance 23 non cylindrique.

La portion cylindrique 13 ne nécessite en principe pas un tel renforcement du fait de sa géométrie.

Dans l'exemple de la figure 2 le renforcement 2 comprend une structure solide disposée de façon continue sur la portion de surface extérieure de l'enveloppe externe 3 ayant extérieur un volume non cylindrique. Cette couche continue de renforcement 2 comprend un matériau résistant à la compression par exemple du bois et/ou de la mousse (PVC et/ou polystyrène et/ou polyuréthane) et/ou une structure en nid d'abeille et/ou des raidisseurs métalliques et/ou tout autre élément équivalent.

Comme représenté, l'élément de renforcement 2 continu est interposé sur au moins une partie de la longueur du réservoir entre la surface extérieure de l'enveloppe externe 3 et une paroi 1 extérieure rapportée autour d'au moins une partie du réservoir (structure de type « sandwich »). Cette structure en sandwich (renfort 2 entre les parois 3 et 1) est particulièrement bien adaptée à ce type de réservoir car permet efficacement de limiter les contraintes et déformations du réservoir externe.

Comme représenté, la couche de renforcement 2 peut avoir une épaisseur variable selon la circonférence du réservoir et en particulier une épaisseur qui peut être croissante depuis la portion cylindrique 13 (limite de la portion cylindrique) jusque vers le sommet de l'excroissance 23.

La variante de la figure 3 se distingue de celle de la figure 2 uniquement en ce que les éléments de renfort 2 son disposés de façon discrète (discontinue) le long du réservoir. Les éléments 2 de renforts peuvent former des anneaux de renforcement de préférence de même largueur et régulièrement espacés.

On comprend donc aisément que, tout en étant de structure simple et peu coûteuse, l'invention permet d'optimiser le volume du réservoir interne tout en limitant les échanges de chaleurs indésirables avec l'extérieur.

Ainsi, le réservoir selon l'invention ne présente que de faibles transferts thermiques entre l'intérieur et l'extérieur par rapport à l'art antérieur.

De plus, la mise en place de l'enveloppe interne dans l'enveloppe externe est facilitée et le risque de fuite est minimisé.

L'invention est avantageusement adaptée au stockage d'hydrogène ou tout autre liquide cryogénique (gaz naturel liquéfié par exemple) lorsqu'un volume de stockage important est nécessaire et que la géométrie ne peut être simplement cylindrique.

Les enveloppes 3 et 4 peuvent avantageusement être réalisées en acier inoxydable d'une épaisseur inférieure à 4 mm, typiquement inférieure à 3 mm, ou tout autre matériau approprié.

Bien que l'invention ait été décrite en relation avec un mode de réalisation particulier, elle ne s'en trouve pas limitée mais est susceptible de modifications et de variantes qui apparaîtront à l'homme du métier dans le cadre des revendications ci-après. En particulier, le réservoir peut, selon les besoins d'implantation présenter d'autre formes (aplatie, segmenté en forme de pétales...).

## Revendications

1. Réservoir de fluide cryogénique, comprenant une enveloppe interne (4) disposée dans une enveloppe externe (3) avec interposition d'un espace d'isolation sous vide (6), le réservoir et en particulier les deux enveloppes interne (4) et externe (3) ayant une forme générale oblongue dont la section selon un plan perpendiculaire à l'axe longitudinal est non circulaire, ledit réservoir comprenant au moins un élément (2) de renforcement de l'enveloppe externe pour éviter le flambage de cette dernière le ou les éléments (2) de renforcement de l'enveloppe externe étant disposés uniquement sur la surface extérieure de l'enveloppe externe (3), le réservoir et en particulier les deux enveloppes interne (4) et externe (3) ayant chacune une forme comprenant une portion circulaire (13, 14) augmentée d'une excroissance (23, 24) faisant saille par rapport au cercle fictif (13, 14) complet définit par la portion circulaire (13, 14), **caractérisé en ce que**, le ou les éléments (2) de renforcement de l'enveloppe externe ont une épaisseur variable selon la circonférence de la surface extérieure de l'enveloppe externe (3) dans un plan perpendiculaire à l'axe longitudinal, en section selon un plan perpendiculaire à l'axe longitudinal du réservoir, ; l'épaisseur du ou des éléments de renforcement étant croissante depuis la limite de la portion cylindrique jusque vers le sommet de l'excroissance.

2. Réservoir selon la revendication 1, **caractérisé en ce que** le ou les éléments (2) de renforcement comprennent une structure disposée de façon continue ou de façon discrète sur la portion de surface extérieure de l'enveloppe externe (3) ayant un volume non cylindrique.

3. Réservoir selon la revendication 1 ou 2, **caractérisé en ce que** le ou les éléments (2) de renforcement comprennent l'un au moins des constituants suivants : du bois, de la mousse plastique, une structure à nid d'abeille, des raidisseurs métalliques.

4. Réservoir selon l'une quelconque des revendications 1 à 3, **caractérisé en ce que** le ou les éléments (2) de renforcement sont interposés entre la surface extérieure de l'enveloppe externe (3) et une paroi (1) extérieure rapportée autour d'au moins une partie du réservoir.

5. Réservoir selon la revendication 4, **caractérisé en ce que** les excroissances (23, 24) définies par les enveloppes externes et internes forment chacune un volume distinct d'une portion de cylindre, c'est-à-dire que la surface extérieure totale de chaque excroissance (23, 24) ne correspond pas à une portion de cylindre.

6. Réservoir selon l'une quelconque des revendications 1 à 5, **caractérisé en ce que** l'enveloppe interne comprend au moins un élément de renfort (5) interne tel qu'une paroi ou membrane reliant transversalement deux portions de l'enveloppe (4).

7. Réservoir selon l'une quelconque des revendications 1 à 6, **caractérisé en ce que** le ou les éléments (2) de renforcement sont disposés uniquement sur la portion de surface extérieure de l'enveloppe externe (3) correspondant à l'excroissance.

8. Réservoir selon l'une quelconque des revendications 1 à 7, **caractérisé en ce que** le ou les éléments (2) de renforcement sont déposés uniquement sur la portion de surface extérieure située entre d'une part la limite de la portion cylindrique et, d'autre part, le sommet de l'excroissance (23).

9. Véhicule automobile comprenant un réservoir de carburant conforme à l'une quelconque des revendications 1 à 8.

## Claims

1. Cryogenic fluid tank comprising an internal casing (4) positioned inside an external casing (3) with a vacuum insulation space (6) in between, the tank and in particular the two, internal (4) and external (3), casings being of oblong overall shape, their cross section on a plane perpendicular to the longitudinal axis being non-circular, the said tank comprising at least one element (2) for reinforcing the external casing to prevent the latter from buckling, the element or elements (2) for reinforcing the external casing being positioned only on the exterior surface of the external casing (3), the reservoir and in particular the two, internal (4) and external (3), casings each having a shape comprising a circular portion (13, 14) increased by a protrusion (23, 24) that projects with respect to the imaginary complete circle (13, 14) defined by the circular portion (13, 14), **characterized in that** the element or elements (2) that reinforce the external casing have a thickness that varies around the circumference of the exterior surface of the external casing (3) in a plane perpendicular to the longitudinal axis, in cross section on a plane perpendicular to the longitudinal axis of the tank; the thickness of the reinforcing element or elements increasing from the boundary of the cylindrical portion as far as the top of the protrusion.

2. Tank according to Claim 1, **characterized in that** the reinforcing element or elements (2) comprise a structure positioned continuously or at isolated locations on that portion of the exterior surface of the external casing (3) that has a non-cylindrical volume.

3. Tank according to Claim 1 or 2, **characterized in that** the reinforcing element or elements (2) comprise at least one of the following constituents: wood, plastic foam, a honeycomb structure, metal stiffeners.

4. Tank according to any one of Claims 1 to 3, **characterized in that** the reinforcing element or elements (2) are interposed between the exterior surface of the outer casing (3) and an exterior wall (1) added around at least part of the tank.

5. Tank according to Claim 4, **characterized in that** the protrusions (23, 24) defined by the external and internal casings each form a volume distinct from a portion of a cylinder, that is to say that the overall exterior surface of each protrusion (23, 24) does not correspond to a portion of a cylinder.

6. Tank according to any one of Claims 1 to 5, **characterized in that** the internal casing comprises at least one internal reinforcing element (5) such as a wall or membrane transversely connecting two portions of the casing (4).

7. Tank according to any one of Claims 1 to 6, **characterized in that** the reinforcing element or elements (2) are positioned only on that portion of the exterior surface of the external casing (3) that corresponds to the protrusion.

8. Tank according to any one of Claims 1 to 7, **characterized in that** the reinforcing element or elements (2) are applied only to that portion of the exterior surface that lies between, on the one hand, the boundary of the circular portion and, on the other hand, the top of the protrusion (23).

9. Motor vehicle comprising a fuel tank according to any one of Claims 1 to 8.

## Patentansprüche

1. Vorratsbehälter für kryogenes Fluid, der eine innere Hülle (4) aufweist, die in einer äußeren Hülle (3) angeordnet ist, wobei dazwischen ein Vakuumisolationsraum (6) vorgesehen ist, wobei der Vorratsbehälter und insbesondere die beiden Hüllen, die innere Hülle (4) und die äußere Hülle (3), eine längliche allgemeine Form haben, deren Querschnitt in einer Ebene senkrecht zur Längsachse nicht kreisförmig ist, wobei der Vorratsbehälter wenigstens ein Element (2) für die Verstärkung der äußeren Hülle aufweist, um das Knicken dieser letzteren zu vermeiden, wobei das oder die Elemente (2) für die Verstärkung der äußeren Hülle nur auf der äußeren Oberfläche der äußeren Hülle (3) angeordnet sind, wobei der Vorratsbehälter und insbesondere die beiden Hüllen, die innere Hülle (4) und die äußere Hülle (3), jeweils eine Form haben, die einen kreisförmigen Abschnitt (13, 14) besitzt, der um eine Ausbauchung (23, 24) erhöht ist, die in Bezug auf den vollständigen, fiktiven Kreis (13, 14), der durch den kreisförmigen Abschnitt (13, 14) definiert ist, vorsteht, **dadurch gekennzeichnet, dass** das oder die Elemente (2) für die Verstärkung der äußeren Hülle längs des Umfangs der äußeren Oberfläche der äußeren Hülle (3) in einer Ebene senkrecht zur Längsachse im Schnitt in einer Ebene senkrecht zur Längsachse des Vorratsbehälters eine veränderliche Dicke haben; wobei die Dicke des oder der Verstärkungselemente von der Grenze des zylindrischen Abschnitts bis zum Scheitelpunkt der Ausbauchung zunimmt.

2. Vorratsbehälter nach Anspruch 1, **dadurch gekennzeichnet, dass** das oder die Verstärkungselemente (2) eine Struktur aufweisen, die auf dem Abschnitt der äußeren Oberfläche der äußeren Hülle (3), der ein nicht zylindrisches Volumen hat, kontinuierlich oder diskret angeordnet ist.

3. Vorratsbehälter nach Anspruch 1 oder 2, **dadurch gekennzeichnet, dass** das oder die Verstärkungselemente (2) wenigstens einen der folgenden Bestandteile aufweisen: Holz, Schaumstoff, eine Bienenwabenstruktur, metallische Verstärkungen.

4. Vorratsbehälter nach einem der Ansprüche 1 bis 3, **dadurch gekennzeichnet, dass** das oder die Verstärkungselemente (2) zwischen der äußeren Oberfläche der äußeren Hülle (3) und einer äußeren Wand (1), die wenigstens um einen Teil des Vorratsbehälters angefügt ist, eingefügt sind.

5. Vorratsbehälter nach Anspruch 4, **dadurch gekennzeichnet, dass** die durch die äußere Hülle und die innere Hülle definierten Ausbauchungen (23, 24) jeweils ein anderes Volumen eines zylindrischen Abschnitts bilden, d. h., dass die gesamte äußere Oberfläche jeder Ausbauchung (23, 24) keinem zylindrischen Abschnitt entspricht.

6. Vorratsbehälter nach einem der Ansprüche 1 bis 5, **dadurch gekennzeichnet, dass** die innere Hülle wenigstens ein inneres Verstärkungselement (5) wie etwa eine Wand oder Membran aufweist, die zwei Abschnitte der Hülle (4) transversal verbindet.

7. Vorratsbehälter nach einem der Ansprüche 1 bis 6, **dadurch gekennzeichnet, dass** das oder die Verstärkungselemente (2) nur auf dem Abschnitt der äußeren Oberfläche der äußeren Hülle (3), der der Ausbauchung entspricht, angeordnet sind.

8. Vorratsbehälter nach einem der Ansprüche 1 bis 7, **dadurch gekennzeichnet, dass** das oder die Verstärkungselemente (2) nur auf den Abschnitt der äußeren Oberfläche aufgebracht sind, der sich zwischen einerseits der Grenze des zylindrischen Abschnitts und andererseits dem Scheitelpunkt der Ausbauchung (23) befindet.

9. Kraftfahrzeug, das einen Kraftstoffvorratsbehälter nach einem der Ansprüche 1 bis 8 enthält.
